# EUROPÄISCHE PATENTSCHRIFT

(11) **EP 0 396 995 B1**
(45) Veröffentlichungstag und Bekanntmachung des Hinweises auf die Patenterteilung: **23.03.1994**
(21) Anmeldenummer: 90108183.6
(22) Anmeldetag: 28.04.1990
(51) Int. Cl.: B65G 57/30

(54) **Vorrichtung zum Heben von Gegenständen, insbesondere von Packungen zur Bildung von abförderbaren Stapeln**
Apparatus for lifting objects, in particular packages, for forming conveyable stacks
Dispositif pour soulever des objets, en particulier des paquets, pour former des piles transportables

(30) Priorität: 12.05.1989 DE 3915600
(43) Veröffentlichungstag der Anmeldung: 14.11.1990
(73) Patentinhaber: Focke & Co. (GmbH & Co.), 27283 Verden (DE)
(72) Erfinder: Focke, Heinz, D-2810 Verden (DE); Dreyer, Uwe, D-5600 Wuppertal 23 (DE)
(74) Vertreter: Bolte, Erich, Dipl.-Ing.

(56) Entgegenhaltungen:
- US-A- 2 954 133
- US-A- 4 335 987

## Beschreibung

Die Erfindung betrifft eine Vorrichtung zum Heben von Gegenständen, insbesondere von Packungen, zur Bildung von abförderbaren Stapeln aus auf einem Förderer zugeführten Gegenständen durch Zuführen derselben von unten her zum Stapel, wobei an beiden Seiten des Förderers je ein rotierendes Förderelement zum Anheben der Gegenstände angeordnet ist.

Eine solche Vorrichtung ist aus der DE-A 22 06 437 bekannt geworden. Packungen oder dergleichen sollen gehoben und in vertikaler Orientierung gestapelt werden. Dabei soll durch Anheben der Packungen bzw. von Packungsreihen einzelne Packungsgruppen gebildet werden, aus denen dann mittels Verpackungsmaschinen die Herstellung von Verpackungsgebinden möglich ist. Die Vorrichtung weist u. a. jedoch den Nachteil auf, daß sie relativ aufwendig gestaltet ist und beispielsweise neben umlaufenden, zusätzlich auch noch längs verschiebbare Teile zum Heben der Packungen aufweist.

Der Erfindung liegt die Aufgabe zu Grunde, eine Vorrichtung der genannten Gattung zu schaffen, die unter Verwendung verhältnismäßig einfacher Mittel einen kontinuierlichen Betrieb mit sehr hoher Betriebssicherheit auch bei hohen Geschwindigkeiten und bei unterschiedlichsten Gegenständen, insbesondere Packungen ermöglicht.

Zur Lösung dieser Aufgabe ist die Erfindung durch folgende Merkmale gekennzeichnet:
a) die Förderelemente sind kreisringsegmentförmig ausgebildete Fördersegmente, denen je ein oszillierend angetriebenes Haltesegment zugeordnet ist,
b) die Fördersegmente und die Haltesegmente sind koaxial zueinander gelagert, wobei die Haltesegmente einen geringeren Radius aufweisen als die Fördersegmente,
c) die Haltesegmente befinden sich in einer Endstellung außerhalb des Bereichs des Stapels und in einer anderen Endstellung unmittelbar unterhalb des Stapels, derart, daß derselbe zeitweilig durch die Haltesegmente abgestützt wird,
d) die Gegenständen sind durch die Fördersegmente über die Höhe der Haltesegmente anhebbar und auf diesen absetzbar.

Dadurch, daß koaxial zu den an beiden Seiten des Förderers rotierenden Fördersegmenten zum Anheben der Packungen je ein oszillierend angetriebenes Haltesegment zum Halten des Stapels angeordnet ist, wird insbesondere eine sichere Positionierung der Gegenstände während aller Phasen des Anhebens sichergestellt. Dadurch befindet sich z. B. der Stapel der Packungen stets in der zum Abfördern richtigen Höhe. Durch die erfindungsgemäße Anordnung der Fördersegmente und der Haltesegmente können dieselben sehr raumsparend ausgebildet werden, so daß die Vorrichtung auch auf engstem Raum innerhalb einer Verpackungsmaschine einsetzbar ist.

Zweckmäßigerweise sind auch die Haltesegmente kreisringsegmentförmig ausgebildet, wobei sich die Fördersegmente und die Haltesegmente in Umfangsrichtung jeweils über einen Winkel von etwa 90° erstrecken. Hierdurch ist es überraschenderweise möglich geworden, bei äußerst raumsparender Bauweise während der aufeinander abgestimmten Dreh- und Schwenkbewegungen der Segmente für die in regelmäßigen Abständen vorbeibewegten Packungen stets ausreichenden Raum zum Passieren zu schaffen.

Als zweckmäßig hat es sich herausgestellt, wenn die Haltesegmente an ihren inneren Enden mit von den Außenkanten nach innen geführten Ablaufschrägen versehen sind. Diese bewirken, daß der Stapel von Packungen von innen nach außen wegschwenkenden Haltesegmenten ohne stoßartige Bewegung, jeweils weich und schonend auf die unterste, von den Fördersegmenten angehobene Packung gleitet.

Das Abheben der Packungen läßt sich in vorteilhafterweise für die Packungen besonders schonend gestalten, indem die Fördersegmente an ihren unter die Packungen greifenden vorderen Enden mit Abrundungen versehen sind. Die Fördersegmente erfassen die Packungen somit an der Unterseite mit einer weichen, gleitenden Abrollbewegung, so daß die Packungen geschont werden.

An ihren hinteren Enden sind die Fördersegmente mit von den Außenkanten nach innen geführten Ablaufschrägen versehen. Diese bewirken, daß die Packungen von den umlaufenden Fördersegmenten ohne stoßartige Bewegung, weich und schonend auf die Haltesegmente abgleiten. Der Stapel führt eine ständige, pulsierende Auf- und Abbewegung aus.

Vorteilhaft ist es, die Fördersegmente und die Haltesegmente als Teil einer Mantelfläche eines langgestreckten Zylinders auszubilden. Hierdurch können langgestreckte Packungsreihen angehoben und gestapelt werden.

Da u. a. die Fördersegmente auf Hohlwellen angeordnet sind, die von einer rotierenden Hauptwelle der Vorrichtung direkt angetrieben werden, und die Haltesegmente auf einer innerhalb der Hohlwellen koaxial angeordneten Wellen angeordnet sind, die von der Hauptwelle oszillierend angetrieben werden, erfordert die erfindungsgemäße Vorrichtung einen verhältnismäßig geringen Aufwand an apparativen Mitteln und ist kostengünstig herstellbar.

Dieses gilt um so mehr, wenn die innerhalb der Hohlwellen angeordneten Wellen mit den Haltesegmenten von der Hauptwelle über einen Kurbelarm, eine angelenkte Koppel und einen einseitig an einem Festpunkt angelenkten Doppelarm, der an einem sich oszillierend bewegenden Zahnrad exzentrisch angreift, oszillierend angetrieben werden.

In weiterer vorteilhafter Ausgestaltung ist es vorgesehen, daß das oszillierend angetriebene Zahnrad mit einem Zahnrad auf der Welle des einen Haltesegmentes direkt in Eingriff steht und ein Zahnrad auf der Welle des anderen Haltesegmentes über ein zwischengeschaltetes Zahnrad gegenläufig antreibt.

Der von den Packungen gebildete Stapel ist mittels eines Schiebers abschiebbar, wobei aufgrund des formschlüssigen Erfassens und Haltens der Packungen mittels der Segmente stets eine exakte Positionierung der Packungen zum Schieber auch bei hohen Fördergeschwindigkeiten sichergestellt ist. Es lassen sich so Betriebsstörungen auch in diesem Bereich vermeiden.

Ein Ausführungsbeispiel der Erfindung wird nachfolgend anhand der Zeichnung näher erläutert.

Es zeigen:
- Fig. 1: eine Draufsicht auf schematische Darstellung einer Vorrichtung,
- Fig. 2: eine schematische Darstellung der Wirkungsweise der Vorrichtung gemäß Fig. 1,
- Fig. 3: einen Querschnitt durch die Vorrichtung gemäß Fig. 1,
- Fig. 4: die Vorrichtung in einem Schnitt gemäß der Linie A-B in Fig. 3.

Bei dem dargestellten Ausführungsbeispiel geht es darum, mittels der mit 10 bezeichneten Vorrichtung aus Packungen 11 bzw. auch Reihen mehrerer hintereinander angeordneter Packungen 11, die auf einem als Band ausgebildeten Förderer 12 der Vorrichtung 10 zugeführt werden, Stapel 13 zu bilden. Die Stapel 13 werden durch aufeinanderfolgendes Anheben der Packungen 11 bzw. Packungsreihen gebildet, die vom Förderer 12 abgehoben werden. Mittels eines seitlich des Stapels 13 angeordneten Schiebers 14 werden die Stapel 13 jeweils auf einen Abförderer 15 geschoben.

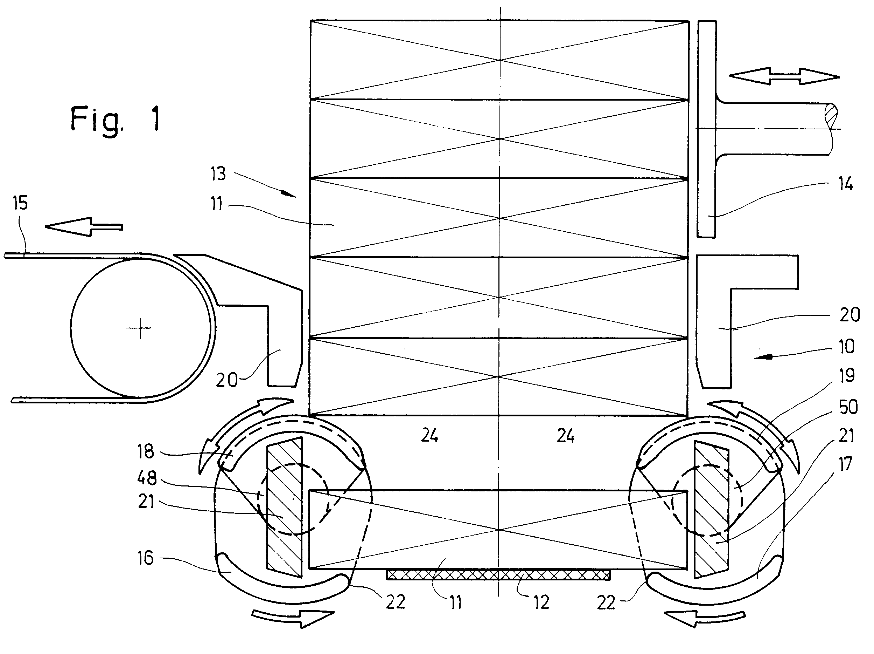

Beidseitig neben dem Förderer 12 sind, wie insbesondere auch aus der Fig. 1 ersichtlich ist, gegenläufig rotierende Fördersegemente 16 und 17 angeordnet. Koaxial dazu sind unterhalb jedes Fördersegmentes 16 und 17 gegenläufig oszillierende Haltesegmente 18 und 19 angeordnet. Mittels beidseitig der Packungen 11 bzw. Packungsreihen angeordneter Führungen 20 und 21 werden die Packungen 11 bzw. Packungsreihen seitlich ausgerichtet.

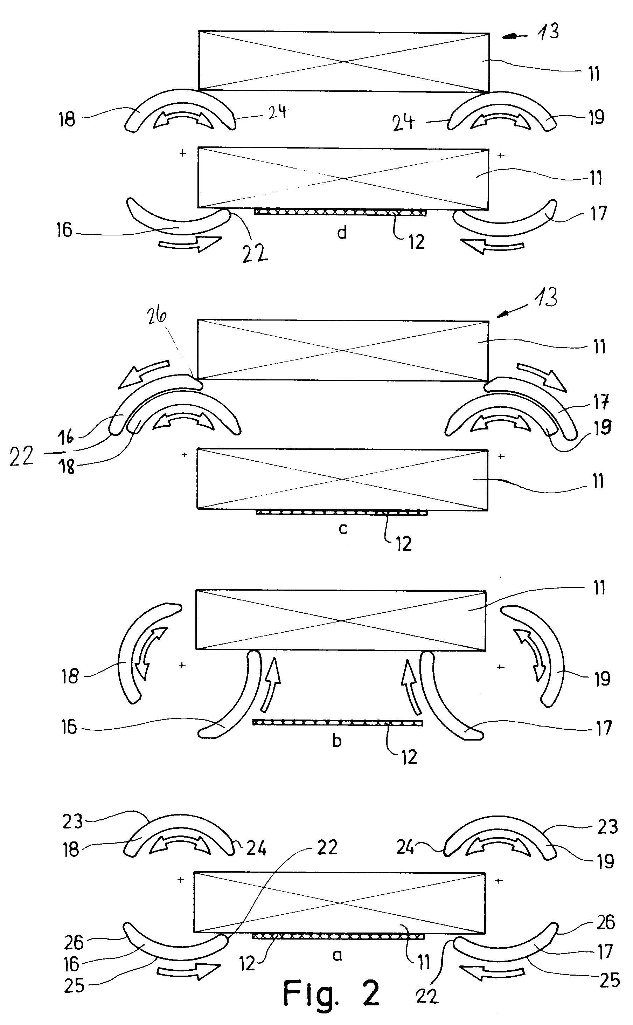

In der Figur 2 der Zeichnung ist die Wirkungsweise der Vorrichtung 10, insbesondere der Fördersegmente 16, 17 und Haltesegmente 18, 19, dargestellt. Wie aus der Darstellung a ersichtlich, greifen die Fördersegmente 16, 17 mit ihren mit Abrundungen 22 versehenen vorderen Enden, gegenläufig unter die Packung 11 bzw. Reihe von Packungen 11 und heben diese, wie in Darstellung b gezeigt, von dem Förderer 12 ab. Die Haltesegmente 18, 19 schwenken dann gegenläufig nach außen, so daß die Packung 11 bzw. die Packungsreihe an den Haltesegmenten 18, 19 vorbei nach oben bewegt werden kann.

Sobald die Fördersegmente 16, 17 die Packung 11 bzw. die Reihe von Packungen 11 über die Höhe der Haltesegmente 18, 19 hinaus angehoben haben, schwenken die Haltesegmente 18, 19 gegenläufig nach innen unter die Fördersegmente 16, 17. Da sich die rotierenden Förderelemente 16, 17, wie aus den Darstellungen c und d ersichtlich, nach außen und schließlich nach unten bewegen, legen sich schließlich die bereits angehobenen Packungen 11 auf die Haltesegmente 18, 19 und werden dort von diesen formschlüssig in einer vorgegebenen Position gehalten.

Die Fördersegmente 16, 17 sind an ihren hinteren Enden mit von ihren Außenkanten 25 nach innen geführten Ablaufschrägen 26 versehen, so daß ein weiches, schonendes Absetzen der Packung 11 bzw. der Reihe von Packungen 11 auf die Haltesegmente 18, 19 erfolgt. Der Stapel 13 der Packungen 11 senkt sich dabei etwas ab.

Aus der Darstellung d ist weiterhin ersichtlich, daß die kontinuierlich rotierenden Fördersegmente 16, 17 eine neue Packung 11 erfassen und, wie bereits beschrieben, anheben. Die Haltesegemente 18, 19 schwenken schließlich, wie gleichfalls bereits beschrieben, wiederum gegenläufig zur Seite und geben den Weg für die angehobene Packung 11 bzw. die Reihe von Packungen frei. Dabei legen sich die bereits angehobenen Packungen 11 des Stapels 13 auf die von den Fördersegmenten 16, 17 jeweils nach oben bewegte Packung 11. Die Haltesegmente 18, 19 sind an ihren inneren Enden mit von ihren Außenkanten 23 nach innen geführten Ablaufschrägen 24 versehen. Diese bewirken, daß der Stapel 13 der Packungen 11 von den nach außen wegschwenkenden Haltesegmenten 18, 19 ohne ruckartige Bewegung, jeweils weich und schonend auf die unterste, von den Fördersegmenten 16, 17 angehobene Packung 11 gleitet.

Sobald die Fördersegmente 16, 17 ihre Rotationsbewegung soweit fortgesetzt haben, daß sie den Bereich der untersten Packung 11 verlassen, halten wiederum die Haltesegmente 18, 19 den Stapel 13 der Packungen 11. Der beschriebene Vorgang setzt sich während des Betriebs der Vorrichtung 10 kontinuierlich fort. Der Stapel 13 führt dabei eine ständige, pulsierende Auf- und Abwärtsbewegung aus.

Mittels des Schiebers 14 wird der von den Packungen 11 gebildete Stapel 13 in regelmäßigen Abständen auf den Abförderer 15 abgeschoben. In einer in der Zeichnung nicht dargestellten Verpackungsmaschine werden die Packungen 11 dann mit einer Ümhüllung versehen, so daß ein Großgebinde entsteht.

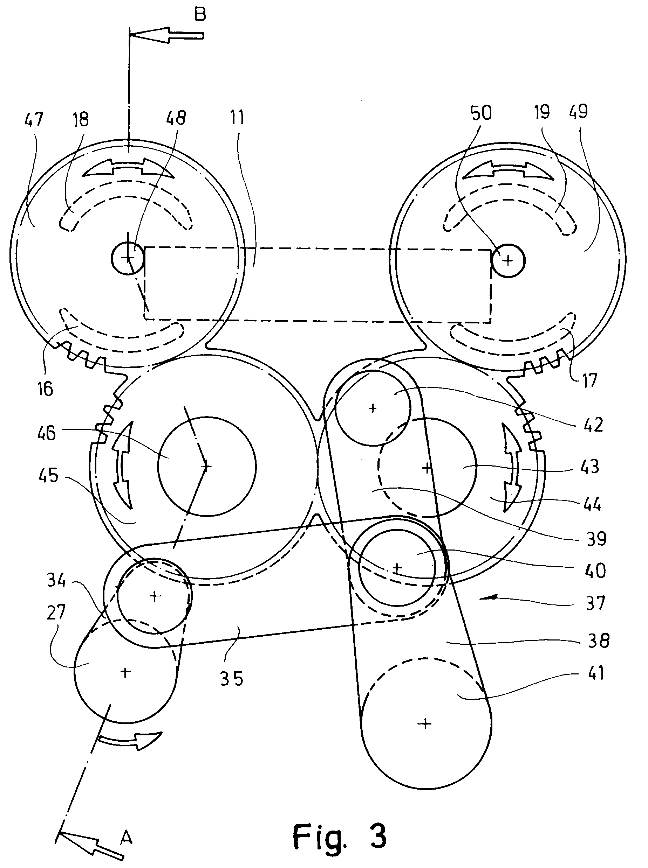

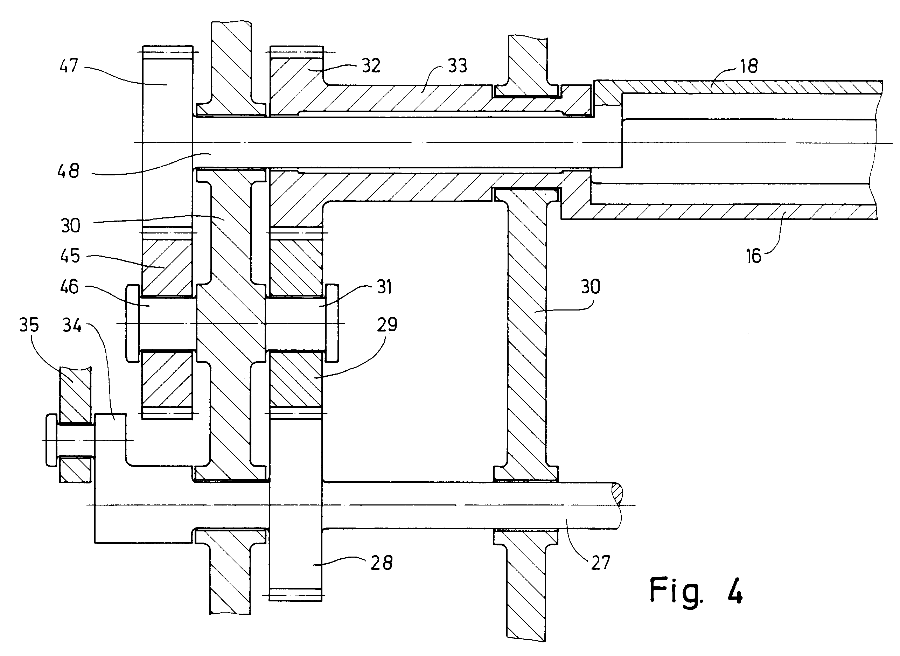

Wie aus den Figuren 3 und 4 ersichtlich, erfolgt der Antrieb der Fördersegmente 16, 17 und der Haltesegmente 18, 19 über eine kontinuierlich rotierende Hauptwelle 27. Die Hauptwelle 27 wird von einem in der Zeichnung nicht dargestellten elektrischen Antriebsmotor angetrieben.

Ein auf der Hauptwelle 27 drehfest angeordnetes Zahnrad 28 steht mit einem Zahnrad 29 im Eingriff, das auf einem im Gehäuse 30 befestigten Lagerbolzen 31 drehbar gelagert ist. Über das Zahnrad 29 treibt die Hauptwelle 27 ein Zahnrad 32 einer Hohlwelle 33 an, an der das Fördersegment 16 befestigt ist. Das Fördersegment 16 führt folglich wie die Hauptwelle 27 eine kontinuierliche Rotationsbewegung aus.

An der Hauptwelle 27 ist weiterhin ein Kurbelarm 34 drehfest befestigt, an dem eine Koppel 35 an einem Lagerbolzen 36 angelenkt ist. Die Koppel 35 ist an einen Doppelarm 37 geführt, der von zwei Armen 38 und 39 gebildet ist. Am Doppelarm 37 ist die Koppel 35 mittels eines Gelenkbolzens 40 angelenkt. Der Gelenkbolzen 40 verbindet die Koppel 35 und die beiden Arme des Doppelarmes 37 gelenkig miteinander. Da der Arm 38 des Doppelarmes 37 an einem ortsfest am Gehäuse 30 befestigten Zapfen 41 schwenkbar gelagert ist und der Arm 39 an einen Lagerbolzen 42 eines auf einem ortsfesten Lagerzapfen 43 angeordneten Zahnrades 44 geführt ist, wird die Bewegung der Hauptwelle 27 über die Koppel 35 in der Form übertragen, daß das Zahnrad 44, wie aus der Figur 3 ersichtlich, eine oszillierende Bewegung ausführt.

Das oszillierend angetriebene Zahnrad 44 steht mit einem Zahnrad 45 in Eingriff, das, wie aus Figur 4 ersichtlich, auf einem am Gehäuse 30 befestigten Lagerzapfen 46 gelagert ist. Wie die Figuren 3 und 4 zeigen, steht das Zahnrad 45 wiederum mit einem Zahnrad 47 in Eingriff, das auf einer koaxial innerhalb der Hohlwelle 33 angeordneten Welle 48 drehfest angeordnet ist, die das eine Haltesegment 18 trägt. Das oszillierend angetriebene Zahnrad 44 steht außerdem, wie aus der Figur 3 ersichtlich, direkt mit einem Zahnrad 49 in Verbindung, das auf einer an das andere Haltesegment 19 geführten Welle 50 drehfest angeordnet ist.

Die oszillierende Bewegung des Zahnrades 44 bewirkt somit, daß auch die Haltesegmente 18, 19 oszillierend angetrieben werden. Aus dem Zusammenwirken der rotierenden Fördersegmente 16, 17 und der oszillierenden Haltesegmente 18, 19 und deren Anordnung ergibt sich die bereits beschriebene Wirkungsweise der Vorrichtung 10.

Die Möglichkeit, die Fördersegmente 16, 17 und die Haltesegmente 18, 19 wie aus Figur 4 der Zeichnung ersichtlich, in axialer Richtung langestreckt auszubilden, macht die erfindungsgemäße Vorrichtung insbesondere auch für das Anheben von längeren Packungsreihen geeignet. So kann die Vorrichtung vorzugsweise auch zur Herstellung von Papiertaschentuch-Packungen eingesetzt werden.

## Patentansprüche

1. Vorrichtung zum Heben von Gegenständen, insbesondere von Packungen (11) zur Bildung von abförderbaren Stapeln (13) aus auf einem Förderer (12) zugeführten Gegenständen durch Zuführen derselben von unten her zum Stapel (13), wobei an beiden Seiten des Förderers (12) je ein rotierendes Förderelement zum Anheben der Gegenstände angeordnet ist, gekennzeichnet durch folgende Merkmale:
a) die Förderelemente sind kreisringsegmentförmig ausgebildete Fördersegmente (16, 17), denen je ein oszillierend angetriebenes Haltesegment (18, 19) zugeordnet ist,
b) die Fördersegmente (16, 17) und die Haltesegmente (18, 19) sind koaxial zueinander gelagert, wobei die Haltesegmente (18, 19) einen geringeren Radius aufweisen als die Fördersegmente (16, 17),
c) die Haltesegmente (18, 19) befinden sich in einer Endstellung außerhalb des Bereichs des Stapels (13) und in einer anderen Endstellung unmittelbar unterhalb des Stapels (13), derart, daß derselbe zeitweilig durch die Haltesegmente (18, 19) abgestützt wird,
d) die Gegenständen (11) sind durch die Fördersegmente (16, 17) bis auf eine Höhe oberhalb der Haltesegmente (18, 19) anhebbar und auf diesen absetzbar.

2. Vorrichtung nach Anspruch 1, dadurch gekennzeichnet, daß die Haltesegmente ebenfalls kreisringsegmentförmig ausgebildet sind, wobei sich die Fördersegmente (16, 17) und die Haltesegmente (18, 19) in Umfangsrichtung jeweils über einen Winkel von etwa 90° erstrecken.

3. Vorrichtung nach den Ansprüchen 1 und 2, dadurch gekennzeichnet, daß die Haltesegmente (18, 19) an ihren inneren Enden mit von den Außenkanten (23) nach innen geführten Ablaufschrägen (24) versehen sind.

4. Vorrichtung nach den Ansprüchen 1 und 2, dadurch gekennzeichnet, daß die Fördersegmente (16, 17) an ihren unter die Gegenständen (11) greifenden vorderen Enden mit Abrundungen (22) und an ihren hinteren Enden mit von den Aussenkanten (25) nach innen geführten Ablaufschrägen (26) versehen sind.

5. Vorrichtung nach einem oder mehreren der Ansprüche 1 bis 4, dadurch gekennzeichnet, daß die Fördersegmente (16, 17) und die Haltesegmente (18, 19) als Teil einer Mantelfläche eines langgestreckten Zylinders ausgebildet sind.

6. Vorrichtung nach einem oder mehreren der Ansprüche 1 bis 5, dadurch gekennzeichnet, daß die Fördersegmente (16, 17) auf Hohlwellen (33) angeordnet sind, die von einer rotierenden Hauptwelle (27) der Vorrichtung (10) direkt angetrieben werden, und das die Haltesegmente (18, 19) auf innerhalb der Hohlwellen (33) koaxial angeordneten Wellen (48, 50) angeordnet sind, die von der Hauptwelle (27) oszillierend angetrieben werden.

7. Vorrichtung nach einem oder mehreren der Ansprüche 1 bis 6, dadurch gekennzeichnet, daß die innerhalb der Hohlwellen (33) angeordneten Wellen (48, 50) mit den Haltesegmenten (18, 19) von der Hauptwelle (27) über einen Kurbelarm (34), eine angelenkte Koppel (35) und einen einseitig an einem Festpunkt (Zapfen 41) angelenkten Doppelarm (37), der an einem sich oszillierend bewegenden Zahnrad (44) exzentrisch angreift, oszillierend angetrieben werden.

8. Vorrichtung nach einem oder mehreren der Ansprüche 1 bis 7, dadurch gekennzeichnet, daß das sich oszillierend bewegende Zahnrad (44) mit einem Zahnrad (49) auf der Welle (50) des einen Haltesegments (19) direkt im Eingriff steht und dieses direkt antreibt und ein Zahnrad (47) auf der Welle (48) des anderen Haltesegments (18) über ein zwischengeschaltetes Zahnrad (45) im gegenläufigen Sinne antreibt.

9. Vorrichtung nach einem oder mehreren der Ansprüche 1 bis 8, dadurch gekennzeichnet, daß der von den gegenständen (11) gebildete Stapel (13) mittels eines Schiebers (14) abschiebbar ist.

## Claims

1. Apparatus for lifting objects, especially packs (11), for the creation of removable stacks (13) of objects supplied on a conveyor (12) by virtue of the said objects being supplied to the stack (13) from below, there being respectively disposed on both sides of the conveyor (12) a rotating conveyor element for raising the objects, characterized by the following features:
a) the conveyor elements are conveyor segments (16, 17) which are configured in the shape of a circular ring segment and to which there are respectively assigned an oscillatingly driven holding segment (18, 19),
b) the conveyor segments (16, 17) and the holding segments (18, 19) are mounted coaxially to one another, the holding segments (18, 19) exhibiting a lesser radius than the conveyor segments (16, 17),
c) the holding segments (18, 19) are located, in one end position, outside the region of the stack (13) and, in another end position, directly beneath the stack (13), such that the said stack is supported intermittently by the holding segments (18, 19),
d) the objects (11) can be raised by the conveyor segments (16, 17) up to a height above the holding segments (18, 19) and set down on these.

2. Apparatus according to Claim 1, characterized in that the holding segments are likewise configured in the shape of a circular ring segment, the conveyor segments (16, 17) and the holding segments (18, 19) extending in the peripheral direction over an angle, in each case, of about 90°.

3. Apparatus according to Claims 1 and 2, characterized in that the holding segments (18, 19) are provided, at their inner ends, with run-down slopes (24) guided inwards from the outer edges (23).

4. Apparatus according to Claims 1 and 2, characterized in that the conveyor segments (16, 17) are provided, at their front ends reaching under the objects (11), with curvatures (22) and, at their rear ends, with run-down slopes (26) guided inwards from the outer edges (25).

5. Apparatus according to one or more of Claims 1 to 4, characterized in that the conveyor segments (16, 17) and the holding segments (18, 19) are configured as part of a contact surface of an elongated cylinder.

6. Apparatus according to one or more of Claims 1 to 5, characterized in that the conveyor segments (16, 17) are disposed on hollow shafts (33) which are driven directly by a rotating main shaft (27) of the apparatus (10), and in that the holding segments (18, 19) are disposed on shafts (48, 50) which are disposed coaxially within the hollow shafts (33) and are oscillatingly driven by the main shaft (27).

7. Apparatus according to one or more of Claims 1 to 6, characterized in that the shafts (48, 50) disposed within the hollow shafts (33), with the holding segments (18, 19), are oscillatingly driven by the main shaft (27) via a crank arm (34), a linked connecting rod (35) and a double arm (37) which is linked on one side to a fixed point (journal 41) and which acts eccentrically upon an oscillatingly moving gearwheel (44).

8. Apparatus according to one or more of Claims 1 to 7, characterized in that the oscillatingly moving gearwheel (44) is in direct engagement with a gearwheel (49) on the shaft (50) of the one holding segment (19) and drives the said gearwheel directly and drives a gearwheel (47) on the shaft (48) of the other holding segment (18), via an interposed gearwheel (45), in the counter-running direction.

9. Apparatus according to one or more of Claims 1 to 8, characterized in that the stack (13) formed by the objects (11) can be pushed off by means of a pusher (14).

## Revendications

1. Dispositif de levage d'objets, en particulier de paquets (11), pour la formation de piles évacuables (13) d'objets amenés sur un transporteur (12), par amenée de ceux-ci d'en bas à la pile (13), un élément transporteur rotatif pour le soulèvement des objets étant placé de chaque côté du transporteur (12), caractérisé par les caractéristiques suivantes :
a) les éléments transporteurs sont des segments transporteurs (16, 17) en forme de segment de couronne circulaire à chacun desquels est associé un segment de retenue (18, 19) soumis à oscillation,
b) les segments transporteurs (16, 17) et les segments de retenue (18, 19) sont montés coaxialement, les segments de retenue (18, 19) ayant un plus petit rayon que les segments transporteurs (16, 17),
c) les segments de retenue (18, 19) se trouvent, dans une position extrême, en dehors de la zone de la pile (13) et, dans une autre position extrême, immédiatement au-dessous de la pile (13), de façon telle que celle-ci soit supportée temporairement par les segments de retenue (18, 19),
d) les segments transporteurs (16, 17) peuvent soulever les objets (11) jusqu'à une hauteur située au-dessus des segments de retenue (18, 19) et les déposer sur ceux-ci.

2. Dispositif selon la revendication 1, caractérisé par le fait que les segments de retenue sont également en forme de segment de couronne circulaire, les segments transporteurs (16, 17) ainsi que les segments de retenue (18, 19) s'étendant dans la direction circonférentielle sur un angle d'environ 90°.

3. Dispositif selon les revendications 1 et 2, caractérisé par le fait que les segments de retenue (18, 19) sont pourvus à leur extrémité intérieure d'un chanfrein descendant (24) allant du bord extérieur (23) vers l'intérieur.

4. Dispositif selon les revendications 1 et 2, caractérisé par le fait que les segments transporteurs (16, 17) sont pourvus, à leur extrémité avant s'appliquant sous les objets (11), d'un arrondi (22) et, à leur extrémité arrière, d'un chanfrein descendant (26) allant du bord extérieur (25) vers l'intérieur.

5. Dispositif selon une ou plusieurs des revendications 1 à 4, caractérisé par le fait que les segments transporteurs (16, 17) et les segments de retenue (18, 19) font partie de la surface latérale d'un cylindre allongé.

6. Dispositif selon une ou plusieurs des revendications 1 à 5, caractérisé par le fait que les segments transporteurs (16, 17) sont placés sur des arbres creux (33) qui sont entraînés directement par un arbre principal tournant (27) du dispositif (10), et les segments de retenue (18, 19) sont placés sur des arbres (48, 50) placés coaxialement à l'intérieur des arbres creux (33) et soumis à oscillation par l'arbre principal (27).

7. Dispositif selon une ou plusieurs des revendications 1 à 6, caractérisé par le fait que les arbres (48, 50) placés à l'intérieur des arbres creux (33) sont soumis à oscillation avec les segments de retenue (18, 19) par l'arbre principal (27) par l'intermédiaire d'un bras de manivelle (34), d'une barre d'accouplement articulée (35) et d'un double bras (37) articulé d'un côté à un point fixe (axe 41) qui attaque excentriquement une roue dentée oscillante (44).

8. Dispositif selon une ou plusieurs des revendications 1 à 7, caractérisé par le fait que la roue dentée oscillante (44) est directement en prise avec une roue dentée (49) montée sur l'arbre (50) d'un segment de retenue (19) et entraîne directement celle-ci et entraîne en sens contraire, par l'intermédiaire d'une roue dentée intercalée (45), une roue dentée (47) montée sur l'arbre (48) de l'autre segment de retenue (18).

9. Dispositif selon une ou plusieurs des revendications 1 à 8, caractérisé par le fait que la pile (13) formée par les objets (11) peut être évacuée au moyen d'un poussoir (14).
